# EUROPEAN PATENT SPECIFICATION

(11) **EP 0 527 488 B1**
(45) Date of publication and mention of the grant of the patent: **22.07.1998**
(21) Application number: 92113760.0
(22) Date of filing: 12.08.1992
(51) Int. Cl.: H04N 1/40

(54) **Area classification method of an image**
Flächenklassifizierungsverfahren für ein Bild
Procédé de classification de surface d'une image

(30) Priority: 13.08.1991 JP 228335/91; 13.08.1991 JP 228350/91; 13.08.1991 JP 228351/91
(43) Date of publication of application: 17.02.1993
(73) Proprietor: YOZAN INC., Tokyo 155 (JP); SHARP CORPORATION, Osaka 545 (JP)
(72) Inventor: Kawanaka, Seido, Abeno-ku Osaka 545 (JP); Ida, Shiro, Abeno-ku Osaka 545 (JP); Takemura, Hideo, Abeno-ku Osaka 545 (JP); Kumetani, Kouji, Abeno-ku,Osaka 545 (JP)
(74) Representative: Grünecker, Kinkeldey, Stockmair & Schwanhäusser Anwaltssozietät

(56) References cited:
- EP-A- 0 348 703
- EP-A- 0 362 595
- GB-A- 2 167 264
- US-A- 4 400 738
- US-A- 4 729 035

## Description

### FIELD OF THE INVENTION

The present invention relates to a method for classifying areas of an image into character areas to be digitised, picture areas to be represented as gray scale areas and a background area. This method may be employed in facsimile machines, OCR and other image input apparatuses.

The extraction of the background area is useful for inserting an image into the background area, that is, into a vacant area of the image.

### BACKGROUND OF THE INVENTION

Conventionally, when processing an image to digitise a document, parts of the image with high brightness and parts of the image with low brightness are treated as half tone areas and character areas, respectively. In the case that a dark coloured or blackish photograph with rather low brightness is processed, this known method treats such half-tone areas and characters the same. Consequently, the image after the processing lacks a stereoscopic effect and gives a flat impression.

In some editorial applications, it is necessary to combine sentences and pictures by cutting and pasting.

In order to fit part of one document in a vacant area of another document, the vacant area must be extracted exactly because it must be clear before the insertion of the image whether the part to be inserted fits the vacant area. It may be necessary to reduce the size of the image and it is necessary to determine the necessary level of reduction. Automatic extraction of the vacant area is necessary to automatically insert the image into a vacant area of another image.

It is the object of the present invention to provide methods allowing easy extraction of vacant areas or figure areas in an image.

This object is solved by the subject matter of claim 1 and claim 2.

### BRIEF DESCRIPTION OF THE DRAWINGS

Figure 1 is a flow chart of a first embodiment.

Figure 2 is an explanatory diagram of picture or photo areas in an image.

Figure 3 shows rectangles for the picture areas in Figure 2.

Figure 4 shows a unified rectangle from rectangles in Figure 3.

Figure 5 is a histogram of brightness in an image including characters and background.

Figure 6 is a histogram of an image consisting of photos and figures.

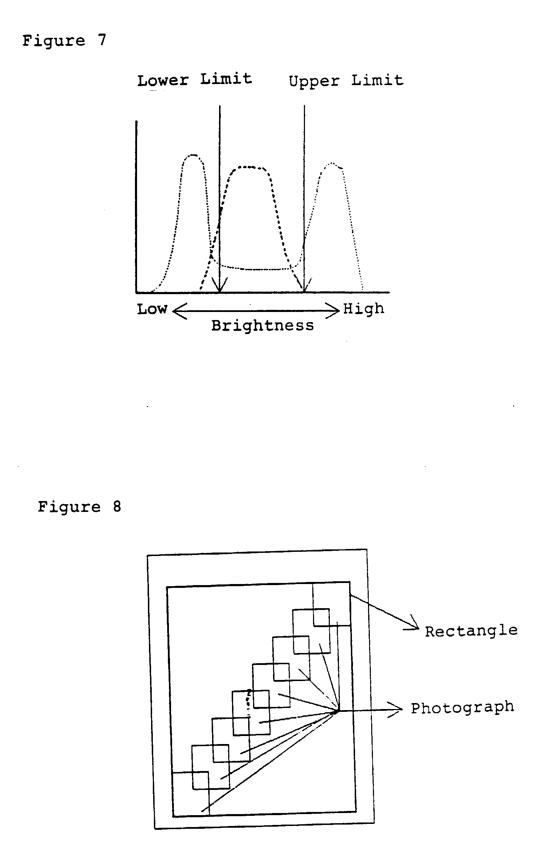

Figure 7 shows upper and lower limit for the histogram in Figure 6.

Figure 8 shows an image of rectangles which are generated for which an exception to the process may be necessary.

Figure 9 shows an example of a document to be reproduced.

Figure 10 is a flow chart of a second embodiment.

Figure 11 shows an image of the document in Figure 10 divided into unit areas.

Figure 12 shows a candidate vacant area and a start point thereof.

Figure 13 shows a plurality of rectangles defined in one candidate in Figure 12.

Figure 14 is a flow chart of a third embodiment.

Figure 15 shows an image of a document into which another image is to be inserted.

Figure 16 shows an image of the pattern in Figure 15 divided into areas.

Figure 17 shows unified candidate picture areas.

### PREFERRED EMBODIMENT OF THE PRESENT INVENTION

Hereinafter, an embodiment of an area classification method of an image is described with reference to the attached drawings.

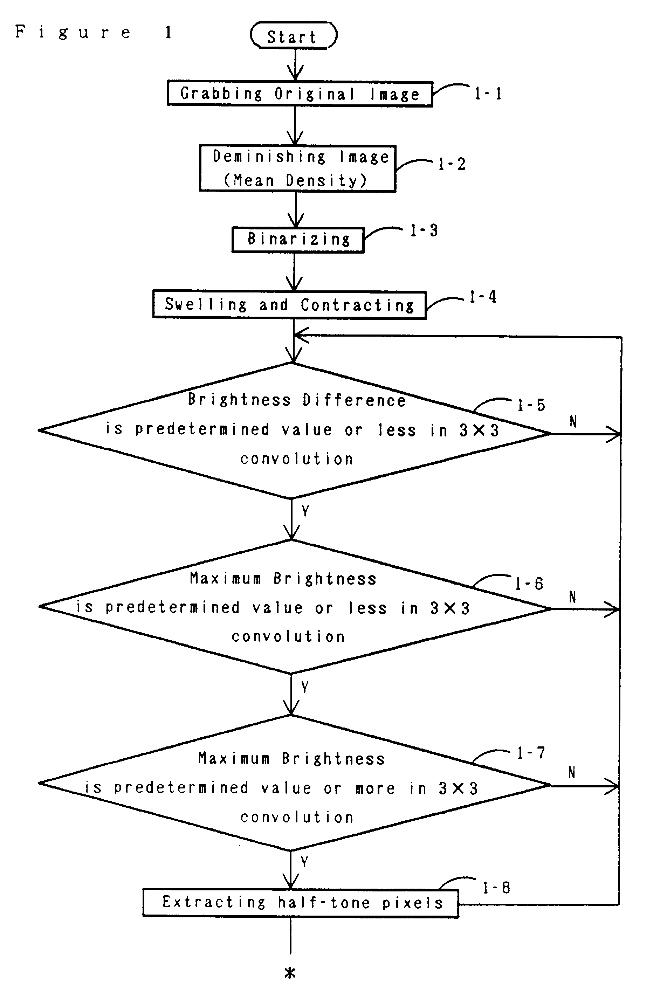

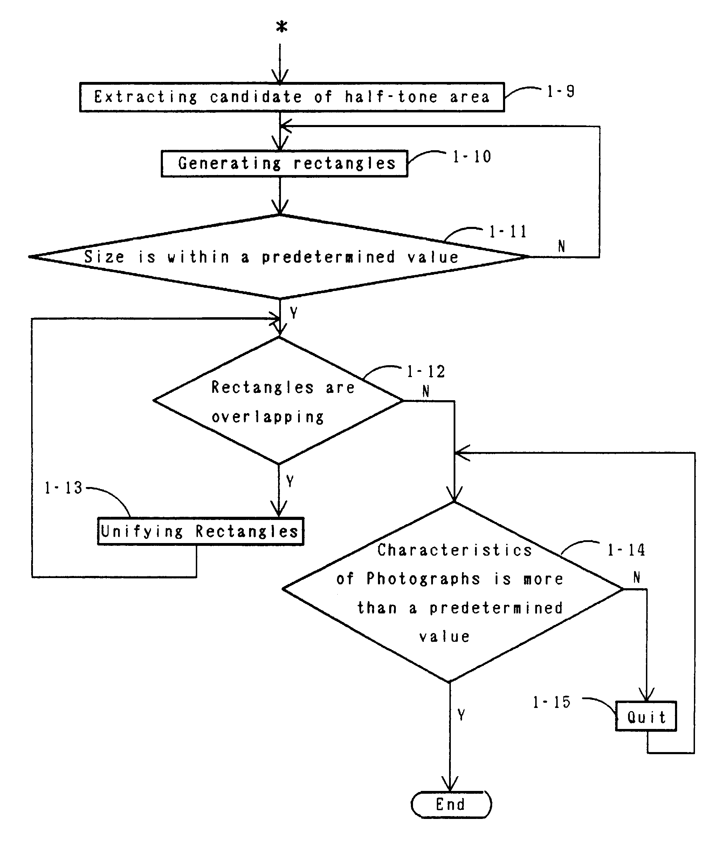

In the flow chart in Figure 1, a document is scanned by an input means such as a scanner in step 1-1 and it is reduced to an appropriate size in step 1-2. A dither image is transformed into a gray image, and a dither photograph is performed the processing regarding the half-tone area by the contraction. Furthermore, the reduction of the size of the image makes it possible to reduce the memory required to store the image for subsequent processing and to effectuate the noise reduction caused by the filtering.

A reduction ratio of 1/8 (50 dots/inch) or less is preferable for an input image of 400 dots/inch, in order to represent a dither image with 65 lines as a gray scale image. A reduction ratio of 1/16 is usually used for practical reasons. On reduction, an area of a predetermined size is generally represented by one pixel. In this case, the mean density of the area is given to the representative pixel to store the gray information of the whole image as much as possible.

Digitising the reduced image in step 1-3, it is expanded and contracted in order for the area on the periphery of half-tone area to be divided clearly in step 1-4. The characters close to a photograph which describe the photograph may be regarded as part of the photograph. In such a case, the characters are processed as if they are a half-tone area, and consequently, the characters are blurred. To prevent such blurring, such a character area is deleted by expansion giving high priority to high brightness and contraction into the same size before the expansion. The photograph area with low-brightness is clearly divided through the steps. Simultaneously, the number of groups is reduced.

In steps 1-5 to 1-8, it is judged whether the centre pixel of a 3 x 3 convolution is a half-tone pixel in the reduced image obtained in step 1-2. The judgement whether it is a half-tone pixel requires consideration of not only the density of the pixel but also the density distribution. Therefore, convolution processing is required.

In step 1-5, the difference between the maximal brightness and the minimum brightness in the pixels of a convolution is determined. Consequently, it is possible to determine whether the difference of the brightness is less than or equal to a predetermined value.

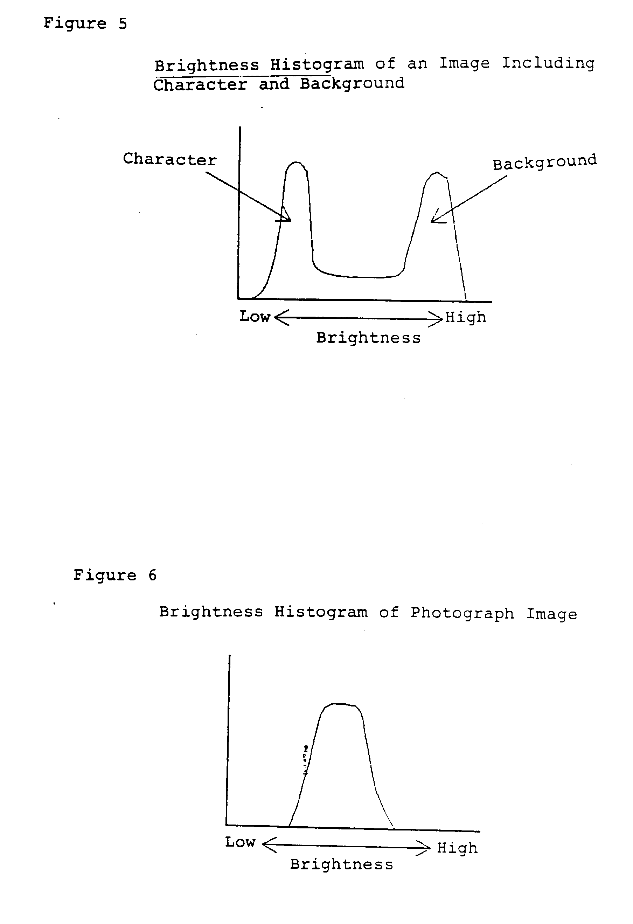

As shown in Figures 5 and 6, the brightness of the half-tone area of a photograph changes gradually. It means that the difference of brightness is an effective indication.

The upper and lower limits of brightness distribution is evaluated in step 1-6 and 1-7. here, the centre pixels in a convolution with an upper limit equal to or more than a predetermined value is excepted from the half-tone pixels and white area in background is reduced. Also, the centre pixel in a convolution with the lower limit equal to or less than a predetermined value is excepted from the half-tone pixels and the area of a large character is deleted.

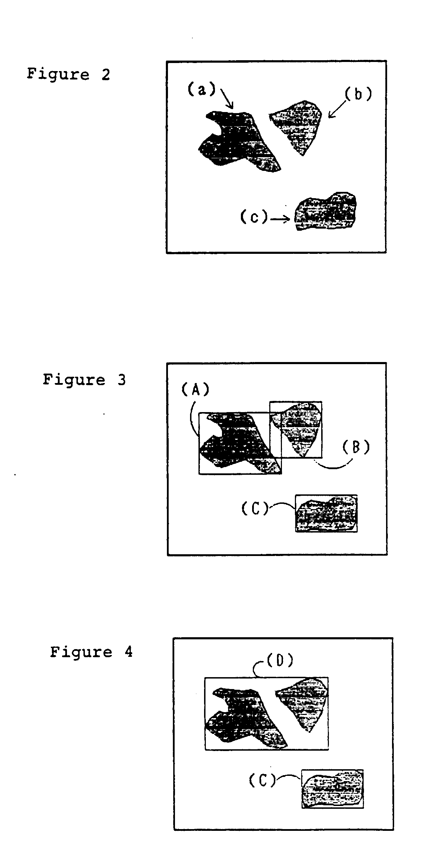

The pixels which satisfies the conditions in step 1-5 to 1-7 are extracted as half-tone pixels in step 1-8, and the half-tone pixels are counted in every area in the digitised image obtained in step 1-4. The unit area to be regarded as a candidate of the half-tone area in step 1-9 is the one whose proportion of the counted value to the number of all pixels is equal to or more than a predetermined value. The circumscribed minimal rectangle of the area judged as a half-tone area of a configuration [Figure 2(a), (b) and (c)] is generated in step 1-10 as shown in Figure 3(A), (B) and (C). High speed operation can be obtained by treating the area as a rectangle. Consequently, the speed can be improved.

Calculating the summation of the lengths of two neighbouring side of a rectangle in step 1-10, it is judged whether the summation is within a predetermined value in step 1-11. Here, when the length of a side of a rectangle is equal to or below a predetermined value, what is in the circumscribed rectangle is not recognised as a photograph or a figure because it does not satisfy the size of a normal photograph or figure. In this case, the processing returns to step 1-10. It is thus possible to adapt the processing to exclude the area in a circumscribed rectangle as being a half-tone image when the proportion of the long side to the short side (or short side to the long side) is abnormal.

When a plurality of rectangles exist, it is judged whether they partially overlap in step 1-12. In Figure 3, rectangles (A) and (B) overlap partially. In this case, both rectangles are integrated into one rectangle (D) in step 1-13. Usually, the overlapped half-tone areas should be treated as one photograph or Figure so as to recognise half-tone areas without fail. Also, as a result of such processing, the division of areas is simplified, and thus the processing can be performed at high speed. Steps 1-12 and 1-13 are repeated until the plurality of rectangles do not overlap. When such overlap disappears, step 1-14 is performed.

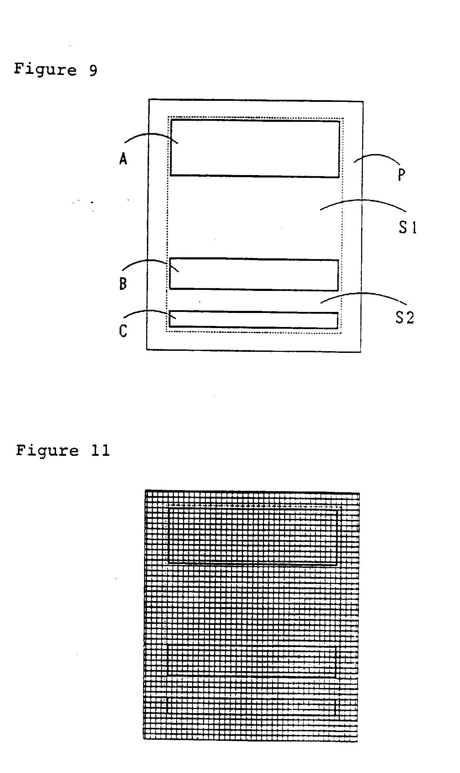

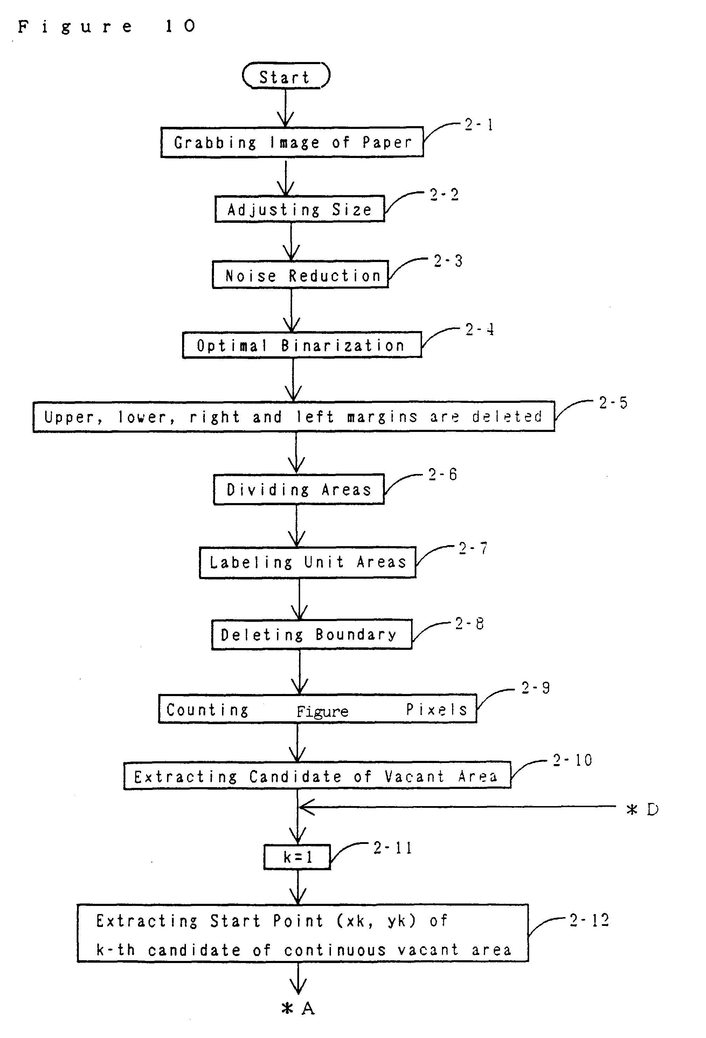

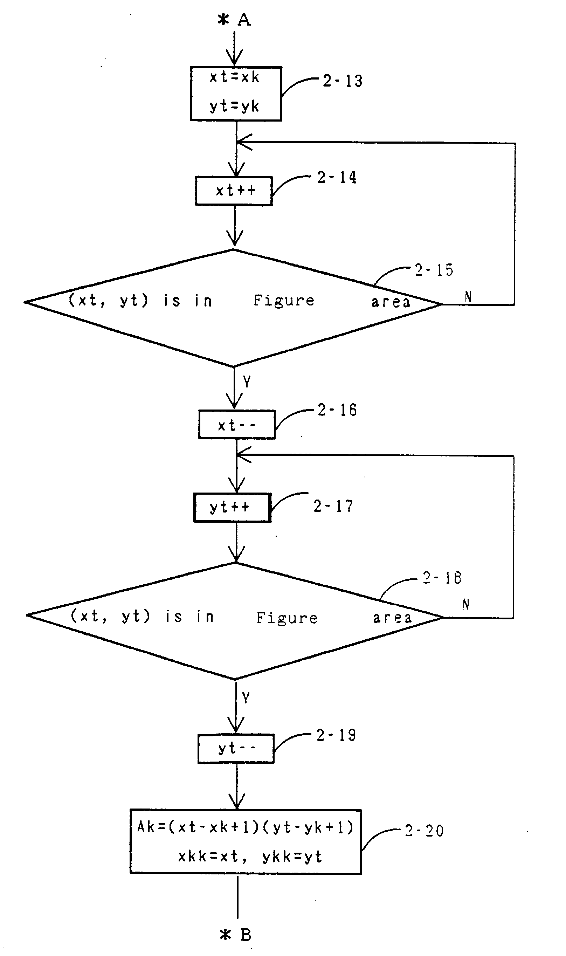

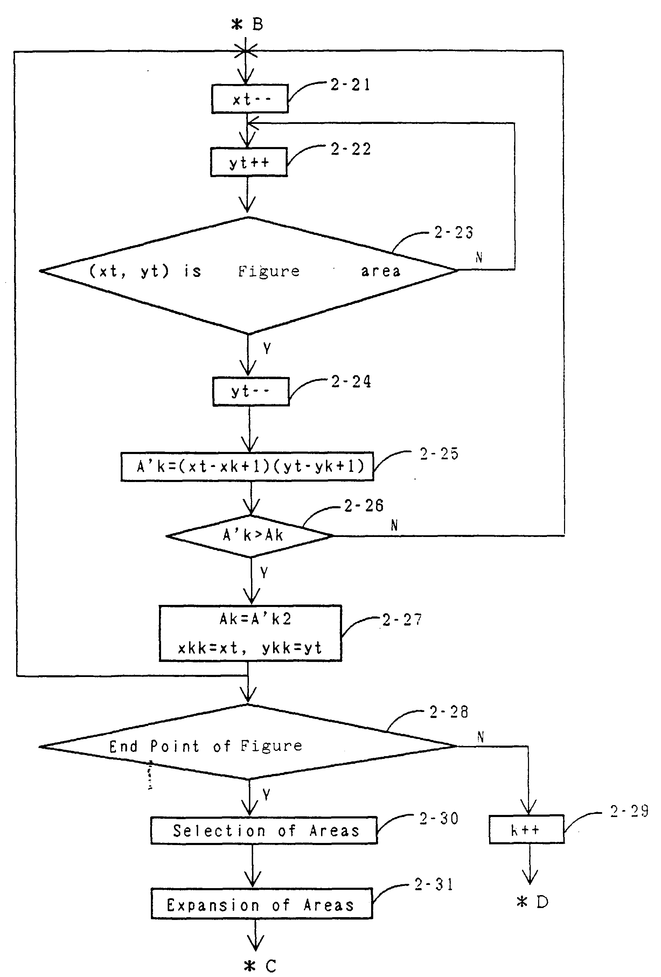

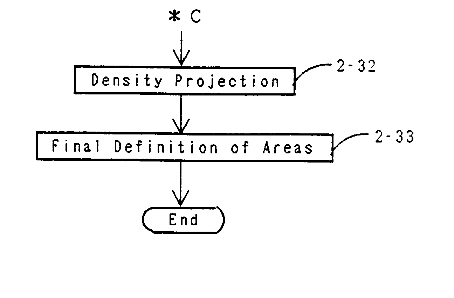

In step 1-14, the area of characteristic pixels of a photograph or figure is calculated with respect to all the divided rectangles and it is judged if the area is within a value equal to or below a predetermined value. When the area is equal to or more than the predetermined value, the processing is completed. There is a case that the area of pixels of a photograph or a drawing in the divided rectangle is below the predetermined value. It is conceivable that such a case is caused by the arrangement of photographs or drawings as in Figure 8. In such a case, it is desirable to stop the extraction of the area of the photograph or a drawing giving a user caution of it in step 1-15. The half-tone area of a photograph or a figure can be precisely distinguished from an area of characters and background.

As mentioned above, it is consequently possible to distinguish precisely the half-tone areas of a photograph or a drawing from areas of characters and background using a scanner which reads a document as an image.

Figure 9 shows a document including vacant areas. When finding a vacant area, it has to be noted that (1) the top, bottom, right and left margins (shown by "P") are not to be considered a vacant area, and (2) when a plurality of vacant areas (as shown by "S1" and "S2") exist, the biggest vacant area must be determined.

In Figure 9, the vacant areas S1 and S2 are among the areas of A, B and C containing written characters or drawings. Each of A, B and C are referred to as "figure areas", hereinafter. All of the areas are wide with approximately the maximum width. Most of the documents with vacant areas containing written characters are of such a style. If another document or drawing is to be inserted in this document, the maximum vacant area must be extracted. In Figure 9, S1 and S2 have the same width and S1 is longer than S2. Therefore, S1 is the biggest vacant area and should therefore be extracted.

Figure 10 shows a flow chart of the process for extracting a vacant area. First, an image of a document is input in step 2-1. The size of the image is adjusted properly in step 2-2. After the size adjustment, noise is reduced in step 2-3 and optimally digitised in step 2-4. Here, the margins "P" are painted with figure pixels so as to exclude the margins from vacant areas in step 2-5.

The process described below judges if the part of the image obtained by the above processing is a vacant area. By combining the process described above and the process described below, a vacant rectangular area is finally extracted.

Dividing the image of the area through the border line with predetermined density into the area of the predetermined unit area of 16 x 16 pixels, for example, in step 2-6 in Figure 11, the areas are labelled in step 2-7. Each area can be designated by it and it is possible to integrate the judgement of each area. Here, the border line is deleted by the expansion of each area in step 2-8.

Whether an area is vacant is judged according to the number of figure pixels in the area. When the number of figure pixels is equal to or less than a predetermined value (several percent, for example), the unit area is regarded as a candidate vacant area in steps 2-9 and 2-10.

It is necessary for the area to be continuous, not broken, in order to insert another document or drawing. A rectangular shape is desirable for the area. The insertion is easy if the rectangle is large. The size of a rectangle is considered taking the area, the length of the longer side of the rectangle, the summation of the lengths both of the longer and the shorter sides, etc.. Here, area is adopted in the same domain and the length of the longer side is adopted in the different area as a barometer.

In and after step 2-10, consecutive candidate vacant areas are integrated into a rectangle. This integration is executed by evaluating the size of the rectangle with the start point of the upper left point in each candidate consecutive vacant area. The start point of each area is detected by scanning the image in raster. The maximum area of a rectangle consisting of a group of consecutive candidate vacant areas is calculated by the process below.

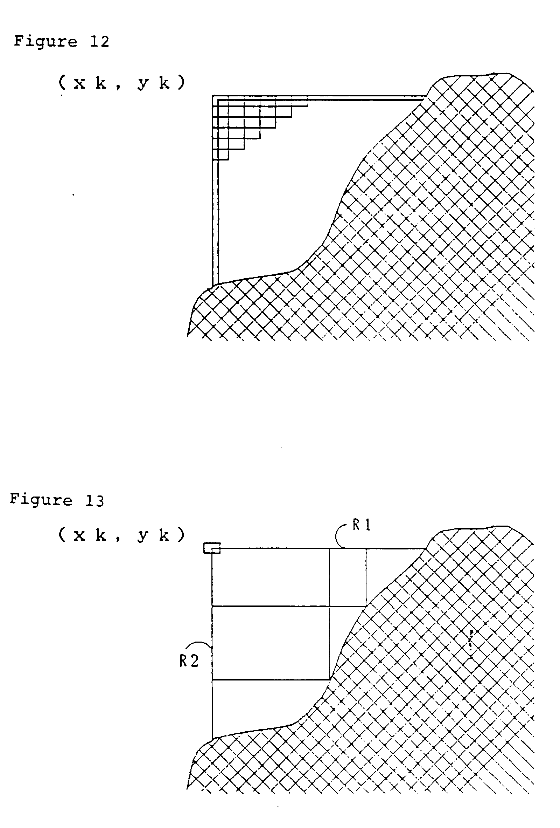

As shown in Figure 12, when the start point (xk, yk) is found in steps 2-11 and 2-12, the area of all rectangles with the same start point is calculated. As shown in Figure 13, it can define a plurality of rectangles, such as R1 and R2, with the same start point and touching a figure area at a different point. The rectangles are evaluated in sequence.

With respect to an area, after setting the initial value of co-ordinates of the start point of scanning in step 2-13, the consecutive vacant areas are scanned from the left to the right and from the upper side to the bottom. The end point in the right direction of a candidate vacant area is detected by increasing the numerical value of "xt" in step 2-14. The detection is continued further. When the detecting point steps in a figure area (in step 2-15), the detective point steps back once to the candidate vacant area (in step 2-16) and the detection in the y-direction is started (in step 2-17). When the detecting point of the y-direction steps in a figure area (in step 2-18), it steps back once to the candidate vacant area (in step 2-19) and the area of the rectangle designated by the previous steps is calculated in step 2-20. The diagonal point (xkk, ykk) of the start point is registered.

Assuming the vacant area to be detected is as shown in Figure 12, the present embodiment may have some limitations. With respect to rectangles with the same start point as shown, the length of a side in the x-direction of a rectangle under the start point will not be longer than the rectangle initially detected. Even when the vacant area includes a convex part with a distance in the x-direction existing which is longer than the length in the x-direction of the rectangle initially detected, the longer part cannot be detected by the method in this application. That is, a rectangle with a side longer than the one detected initially will trespass on the figure area.

In the case in which the shape of the vacant area is reversed to that shown in Figure 12, the detection is performed in reverse, setting the start point on the right side of the vacant area.

A method for detecting a rectangle with shorter sides in the x-direction and longer sides in the y-direction is described hereinafter.

First, "xt" is decreased (step 2-21), and the point in the y-direction is detected (in step 2-22). When the detecting point steps in a figure area (in step 2-23), it steps back once to the candidate vacant area (in step 2-24) and the area of the rectangle thus designated is calculated in step 2-25.

A determined vacant area is replaced by a larger vacant area successively, as shown in step 2-20 and in step 2-27.

Repeating the above process from steps 2-12 to 2-27 through step 2-29, it is completed when (xt, yt) reaches the end point of the candidate vacant area in step 2-28.

The rectangle with the maximum area is calculated by the above steps with respect to each consecutive area and the area which is optimal to be inserted is selected among the rectangles in each consecutive area in step 2-30. The rectangle to be selected is the one with the maximum length of the longer side. The vacant area which runs through widely or long is thus, selected with priority.

Generating an expanded image of the selected vacant area (in step 2-31), the density projection in the x-direction and the y-direction is calculated (instep 2-32). The border line between a vacant area and a figure area is clarified by it, and the maximum vacant area is defined (in step 2-33), preventing the trespass on the figure area.

As mentioned above, the area classification method of an image of the present invention divides an image of a document into predetermined unit areas of a predetermined size, counts the figure pixels in each unit area, regards consecutive unit areas with figure pixels equal to or less than a predetermined value as a candidate vacant area, and recognise the maximal horizontal rectangle (not rotated, inclined or declined) which internally touches the candidate area as a vacant area. Therefore, the optimal vacant area into which another image can be inserted, can be extracted.

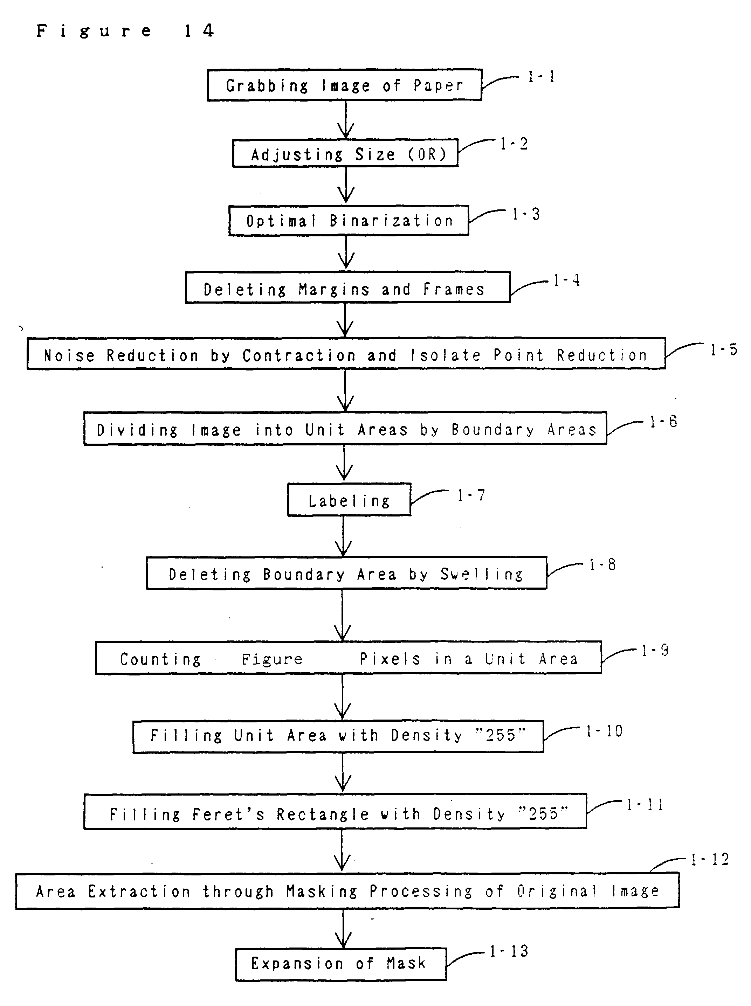

Figure 14 shows a flow chart of the process for extracting a figure area. First, a document to be inserted in another document is input and scanned through an input means such as a scanner in step 1-1 and the size of the input image is adjusted properly for the processing sin the following steps in step 1-2. For example, if the output image of the scanner has 4096 x 4096 pixels and the image to be processed in an image processing means has the capacity of processing 1024 x 1024 pixels, it is necessary for the image to be reduced to a quarter of the size. In this reduction, the figure pixel surely remains without unintended deletion by calculating bitwise OR of the predetermined convolution.

Next, calculating the histogram of the image, it is digitised by the optimal threshold in step 1-3, and the noise is reduced in steps 1-14 and 1-5. There are efficient ways to calculate the optimal threshold: a) regarding the centre value of the density as the optimal threshold, b) mode method, c) discrimination analysis method, d) p-tyle method, etc.. When noise is reduced, all margins of the document are painted by the pixels whose density is "0" (in step 1-4) and they are excepted from the figure area. The noise in margins is reduced simultaneously by it. As it is necessary to leave figure pixels selecting in other areas, noise is reduced by the processing such as isolated point reduction, shrinking, median filter, and so forth (in step 1-5).

The image obtained through the above steps shown in Figure 2 is divided into the unit areas and it is judged whether each unit area is a figure area.

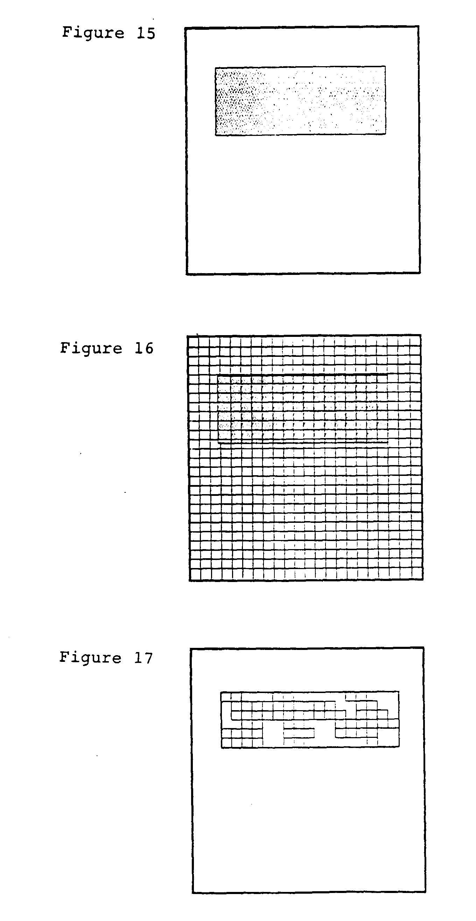

In order to divide the image into the unit areas (16 x 16 pixels, for example), the boundary line is formed with the density "0" (in step 1-6) as in Figure 16, the area divided by the boundary line is labelled (in step 1-7), and simultaneously, the boundary line is deleted by expanding each area (in step 1-8). Each area is specialised and the judgement of each area can be integrated by it.

It is judged whether an area is a figure area according to the number of figure pixels in each area. When the number of figure pixels is equal to or more than the predetermined value (several per cent of the area, for example), the unit area is regarded as a candidate figure area (in step 1-9).

The area extracted as a candidate figure area is painted by the predetermined area ("255", for example) and distinguished clearly from the vacant area (in step 1-10). The shape of the area obtained in this manner is indefinite. Therefore, the area obtained is inconvenient for evaluating the size and inserting another image. Regarding the candidate figure areas as one group, the Feret's configuration of it is calculated and the whole of the figure areas are painted with density "255" (in step 1-11) in order to solve the problem. The minimal horizontal rectangle including the figure area is obtained by it (as shown in Figure 17). The figure areas are extracted by using the horizontal rectangle as a mask pattern (in step 1-13). a) Switching according to a mask image, and b) AND operation of the mask image and the image in Figure 15 can be adopted for the mask processing. As the mask may be smaller than the figure area because pixels of a figure area are deleted by the noise reduction, the peripheries of the mask in Figure 17 can be expanded by a predetermined size (in step 1-12).

In this way, the figure area can be precisely extracted and the insertion after it is easy by extracting a figure area as a horizontal rectangle.

An area classification method of an image digitises an input image of a document, divides the digitised image into unit areas of a predetermined size, counts the configuration pixels in each unit area, regards consecutive area with figure pixels equal to or more than the predetermined value as candidate figure areas, and recognise the horizontal rectangle (not rotated, inclined or declined) which externally touches the candidate area as a figure area. Therefore, it is possible to extract the figure area quickly which is to be inserted in another document.

## Claims

1. Method for determining vacant areas in an image comprising the steps of:
digitising the image (2-4),
dividing the image into a plurality of unit areas of predetermined size (2-6),
determining those unit areas which contain a number of figure pixels which is less than or equal to a predetermined value to obtain vacant unit areas, determining candidate vacant areas consisting only of vacant unit areas (2-4),
finding the maximum rectangular area which fits into said candidate vacant area and treating said rectangular area as the vacant area.

2. Method for determining figure and halftone areas in an image comprising the steps of:
digitising the image (1-3),
dividing the image into a plurality of unit areas of predetermined size (1-6),
determining those unit areas which contain a number of figure pixels which is more than or equal to a predetermined value to obtain figure unit areas, determining candidate figure areas consisting only of figure unit areas (1-9),
finding the minimum rectangular area which circumscribes said candidate figure area and treating said rectangular area as the figure area.

## Patentansprüche

1. Verfahren zum Bestimmen freier Bereiche in einem Bild mit den Schritten:
Digitalisieren des Bildes (2-4),
Aufteilen des Bildes in eine Vielzahl von Einheitsbereichen von vorgegebener Größe (2-6),
Bestimmen derjenigen Einheitsbereiche, welche eine Anzahl von Figurenpixeln enthalten, die kleiner oder gleich einem vorgegebenen Wert ist, um die freien Einheitsbereiche zu erhalten, Bestimmen freier Kandidatenbereiche, die nur aus freien Einheitsbereichen bestehen (2-4),
Finden des maximalen rechtwinkligen Bereiches, welcher in den freien Kandidatenbereich hineinpaßt und Behandeln dieses rechtwinkligen Bereiches als den freien Bereich.

2. Verfahren zum Bestimmen von Figuren- und Rasterbereichen in einem Bild mit den Schritten:
Digitalisieren des Bildes (1-3),
Aufteilen des Bildes in eine Vielzahl von Einheitsbereichen von vorgegebener Größe (1-6),
Bestimmen derjenigen Einheitsbereiche, welche eine Anzahl von Figurenpixeln enthalten, die größer oder gleich einem vorgegebenen Wert ist, um Figureneinheitsbereiche zu erhalten, Bestimmen von Kandidatenfigurenbereichen, welche nur aus Figureneinheitsbereichen bestehen (1-9),
Auffinden des minimalen rechtwinkligen Bereiches, welcher den Kandidatenfigurenbereich umschreibt und Behandeln dieses rechtwinkligen Bereiches als den Figurenbereich.

## Revendications

1. Procédé de détermination de surfaces inoccupées dans une image comprenant les étapes consistant à :
numériser l'image (2 - 4),
diviser l'image en une pluralité de surfaces unitaires de taille prédéterminée (2 - 6),
déterminer les surfaces unitaires qui contiennent un nombre de pixels de figure qui est inférieur ou égal à une valeur prédéterminée pour obtenir des surfaces unitaires inoccupées, déterminant des surfaces inoccupées candidates consistant uniquement en surfaces unitaires inoccupées (2 - 4),
trouver la surface rectangulaire maximale qui s'insère dans ladite surface inoccupée candidate et traiter ladite surface rectangulaire comme la surface inoccupée.

2. Procédé de détermination des surfaces de figure et de demi-teintes dans une image comprenant les étapes consistant à :
numériser l'image (1 - 3),
diviser l'image en une pluralité de surfaces unitaires de taille prédéterminée (1 - 6),
déterminer les surfaces unitaires qui contiennent un nombre de pixels de figure qui est supérieur ou égal à une valeur prédéterminée pour obtenir des surfaces unitaires de figure, déterminant des surfaces de figure candidates consistant uniquement en surfaces unitaires de figure (1 - 9),
trouver la surface rectangulaire minimale qui circonscrit ladite surface de figure candidate et traiter ladite surface rectangulaire comme la surface de figure.
